# EUROPÄISCHE PATENTSCHRIFT

(11) **EP 0 946 270 B1**
(45) Veröffentlichungstag und Bekanntmachung des Hinweises auf die Patenterteilung: **08.06.2005**
(21) Anmeldenummer: 98952595.1
(22) Anmeldetag: 18.09.1998
(51) Int. Cl.: B01D 71/02, B01D 53/22, B01J 35/06, B01D 39/20

(54) **STOFFDURCHLÄSSIGER VERBUNDWERKSTOFF, VERFAHREN ZU DESSEN HERSTELLUNG UND VERWENDUNG DES STOFFDURCHLÄSSIGEN VERBUNDWERKSTOFFES**
PERMEABLE COMPOSITE MATERIAL, METHOD FOR PRODUCING SAID COMPOSITE MATERIAL, AND USE OF THE SAME
MATERIAU COMPOSITE PERMEABLE, SON PROCEDE DE FABRICATION ET SON UTILISATION

(30) Priorität: 20.09.1997 DE 19741498; 18.03.1998 DE 19811708; 19.03.1998 DE 19812035; 08.05.1998 DE 19820580; 03.06.1998 DE 19824666
(43) Veröffentlichungstag der Anmeldung: 06.10.1999
(73) Patentinhaber: Degussa AG, 40474 Düsseldorf (DE)
(72) Erfinder: PENTH, Bernd, D-66822 Lebach (DE); HYING, Christian, D-46414 Rhede (DE); HÖRPEL, Gerhard, D-48301 Nottuln (DE); SCHMIDT, Friedrich, Georg, D-45721 Haltern (DE)
(86) Internationale Anmeldenummer: PCT/EP1998/005939
(87) Internationale Veröffentlichungsnummer: WO 1999/015262

(56) Entgegenhaltungen:
- EP-A- 0 263 468
- EP-A- 0 332 789
- EP-A- 0 778 076
- WO-A-96/00198
- US-A- 4 923 608
- US-A- 5 376 442

## Beschreibung

Beansprucht wird ein Verbundwerkstoff, ein Verfahren zu dessen Herstellung und die Verwendung dieses Verbundwerkstoffes.

Es ist sind verschiedene Anwendungen bekannt, bei denen Verbundwerkstoffe die Keramiken aufweisen, verwendet werden.

Der Vorteil der Keramik aufweisenden Verbundwerkstoffe liegt darin, daß die keramischen Beschichtungen gegenüber den meisten chemischen Substanzen, wie z.B. organischen Substanzen, chemisch inert sind und zudem überwiegend gegenüber Säuren oder Laugen beständig sind. Aus diesem Grund werden Metalle oft mit Keramiken beschichtet, um das Metall vor chemischen Einflüssen zu schützen. Durch die poröse Oberfläche eines mit einer Keramik beschichteten Verbundwerkstoffes erhöht sich zudem die Abriebsfestigkeit von nachträglich aufgebrachten Lacken oder Schutzüberzügen. Keramiken selbst eignen sich aufgrund ihrer porösen Oberfläche außerdem sehr gut für den Einsatz als Membranen oder Filter.

Der Nachteil der Keramiken bzw. der Keramiken aufweisenden Verbundwerkstoffe ist die Sprödheit der Keramik. Mit Keramik beschichtete Metalle sind deshalb sehr stoßempfindlich und die Keramikbeschichtung übersteht kaum eine mechanische Beanspruchung ohne daß die Oberfläche der Keramik verletzt wird. Da auch das Biegen eines solchen keramischen Verbundwerkstoffes zur Verletzung der Keramikschicht führt, sind die Anwendungsgebiete solcher keramischer Verbundwerkstoffe zur Zeit noch begrenzt.

Keramische Verbundwerkstoffe werden trotz der Nachteile häufig auch in der Filtrationstechnik oder Membrantechnik eingesetzt.

In EP 0358 338 wird ein Verfahren beschrieben, mit welchem durch Aufbringen einer ein Metalloxidsol aufweisenden wäßrigen Lösung und Verfestigen dieser Lösung auf einer Oberfläche, vorzugsweise einer glatten Metalloberfläche, diese Oberfläche durch eine Keramikschicht geschützt werden kann. Der wäßrigen Lösung kann zur Verbesserung der Haftung der keramischen Schicht auf der zu schützenden Oberfläche ein Metalloxidpulver und/oder ein Haftverbesserer zugesetzt werden. Das Verfahren beschreibt nicht das Aufbringen von Schichten auf stoffdurchlässige Trägermaterialien.

WO 96/00198 lehrt die Herstellung keramischer Schichten auf Oberflächen von diversen Materialien. Diese beschichteten Materialien können als Membranen zur Nanofiluation eingesetzt werden. Bei diesem Verfahren wird Titandioxidsol mit Aluminiumoxidpulver dispergiert, wobei Salzsäure zur Peptisierung verwendet wird.

US 4934139 lehrt ein Verfahren zur Herstellung keramischer Membranen für die Ultrafiltration und Mikrofiltration. Zur Herstellung solcher keramischer Membranen wird ein Sol oder eine Partikelsuspension auf einen porösen Metallträger gebracht und gesintert. Der poröse Träger kann Edelstahl-Sintermetall oder Edelstahlgewebe sein, in dessen Zwischenräume Metallpartikel eingesintert wurden. Metallgewebe mit Zwischenräumen über 100 µm lassen sich ohne Einsintern von Metallpartikeln nach diesem Verfahren nicht herstellen. Das Verfahren vermeidet, daß die Suspension oder das Sol in die Zwischenräume des Trägermaterials eindringen.

In US 5376442 und US 5605628 wird zur Überbrückung von Zwischenräumen im Trägermaterial ein organischer Binder in die Beschichtungslösung eingearbeitet. Dieser Binder muß beim Verfestigen wieder entfernt werden, was zu Unregelmäßigkeiten in der Keramikoberfläche und/oder -struktur führen kann.

Ebenso wird in DE 4210413 das anorganische Pulver mit Hilfe eines polymeren Harzes fixiert Dieses Harz muß beim Verfestigen ebenfalls wieder entfernt werden, was zu Unregelmäßigkeiten in der Keramikoberfläche und/oder -struktur führen kann.

Mit den vorgenannten Verfahren ist es nicht möglich, Keramik enthaltende Verbundwerkstoffe herzustellen, die auf und in dem Trägermaterial Keramik aufweisen, ohne daß die keramische Schicht bei der Herstellung oder Anwendung Schaden nimmt.

Der vorliegenden Erfindung liegt daher die Aufgabe zugrunde, einen Verbundwerkstoff, der auf und in dem Träger keramische Bestandteile aufweist, und ein einfaches und wirtschaftliches Verfahren zur Herstellung eines solchen Verbundwerkstoffes zu finden.

Überraschenderweise wurde gefunden, daß der erfindungsgemäße stoffdurchlässiger Verbundwerkstoff einfach und kostengünstig hergestellt werden kann.

Gegenstand der vorliegenden Erfindung ist ein biegbarer, stoffdurchlässiger Verbundwerkstoff auf Basis zumindest eines durchbrochenen und stoffdurchlässigen Trägers, der auf zumindest einer Seite des Trägers und im Inneren des Trägers zumindest eine anorganische Komponente aufweist, die durch Aufbringen einer Suspension, die zumindest eine, eine Verbindung zumindest eines der Elemente Sc, Y, Ti, Zr, Nb, V, Cr, Mo, W, Mn, Fe, Co, B, Al, In, Tl, Si, Ge, Sn, Pb, Sb oder Bi mit zumindest einem der Elemente Te, Se, S, O, Sb, As, P, N, Ge, Si, C oder Ga aufweisende, anorganische Komponente die eine Korngröße von 1 bis 10000 nm aufweist suspendiert in einem Sol aufweist, auf zumindest einen durchbrochenen und stoffdurchlässigen Träger, der Fasern aus zumindest einem Material, ausgewählt aus Kohlenstoff, Metallen, Legierungen, Keramiken, Glas, Mineralien, Kunststoffen, amorphen Substanzen, Verbundstoffen oder Naturprodukten oder aus zumindest einer Kombination solcher Materialien aufweist und zumindest einmaliges Erwärmen auf eine Temperatur von 50 bis 100 °C für 10 Minuten bis 5 Stunden oder auf eine Temperatur von 100 bis 800 °C für 1 Sekunde bis. 10 Minuten, bei welchem die zumindest eine anorganische Komponente aufweisende Suspension auf und im Träger verfestigt wird, erhältlich ist,
dadurch gekennzeichnet,
dass der Verbundwerkstoff eine Dicke von 5 bis 150 µm aufweist und bis zu einem Radius von 1 mm biegbar ist und
dass ein Sol, hergestellt durch Hydrolisieren, zumindest eines Metallnitrats, Metallchlorids, Metallcarbonats, einer Metallalkoholatverbindung oder einer Halbmetallalkoholatverbindung ausgewählt aus den Verbindungen der Elemente Zr oder Si eingesetzt wird.

Auch Gegenstand der vorliegenden Erfindung ist ein Verfahren zur Herstellung eines Verbundwerkstoffes gemäß einem der Ansprüche 21 bis 36 gebracht wird, die zumindest eine anorganische Komponente aus zumindest einer Verbindung zumindest eines Metalls mit zumindest einem der Elemente der 3. bis 7. Hauptgruppe aufweist und durch anschließendes, zumindest einmaliges Erwärmen die Suspension auf oder im oder

Außerdem ist Gegenstand der vorliegenden Erfindung eine Verwendung eines Verbundwerkstoffes nach zumindest einem der Anspruche 37-45 als Filter zur Auftrennung von Stoffgemischen.

Unter stoffdurchlässigen Verbundwerkstoffen bzw. Trägern werden Materialien verstanden, die durchlässig sind für Stoffe mit einer Teilchengröße von 0,5 nm bis 500 µm, je nach Ausführungsform des Verbundwerkstoffes bzw. Trägers. Die Stoffe können gasförmig, flüssig oder fest oder in einer Mischform dieser Aggregatzustände vorliegen.

Der erfindungsgemäße Verbundwerkstoff hat den Vorteil, daß auf und in einem durchbrochenen und stoffdurchlässigen Träger anorganische Komponenten verfestigt werden können, die diesem Verbundwerkstoff gestatten stoffdurchlässige Eigenschaften zu haben, ohne daß die Beschichtung bei der Herstellung Schaden nimmt.

Der erfindungsgemäße Verbundwerkstoff hat außerdem den Vorteil, daß er sich, obwohl er zum Teil aus Keramik besteht, auf einen Radius von bis zu 1 mm biegen läßt. Diese Eigenschaft ermöglicht eine besonders einfaches Verfahren zur Herstellung dieses Verbundwerkstoffes, da der durch Beschichten mit einer Keramik entstandene Verbundwerkstoff auf einer Rolle auf- oder abgewickelt werden kann.

Das Verfahren zur Herstellung des erfindungsgemäßen Verbundwerkstoffes hat außerdem den Vorteil, daß Träger mit durchbrochener Oberfläche beschichtet werden können, die eine maximale Größe der Zwischenräume von 500 µm aufweisen. Durch die besonderen schonenden Bedingungen bei der Verfestigung der Suspension in oder auf dem Träger ist es möglich auch Trägermaterialien zu verwenden, die keinen oder nur sehr kurz hohen Temperaturen ausgesetzt werden können.

Der nach dem erfindungsgemäßen Verfahren hergestellte erfindungsgemäße Verbundwerkstoff eignet sich hervorragend zur Verwendung als Filter oder Membran. Durch die Möglichkeit auch Träger verwenden zu können, die Zwischenräume bis zu einer Größe von 500 µm aufweisen können, kann äußerst preisgünstiges Material verwendet werden. Über die verwendete Teilchengröße in Kombination mit der Größe der Zwischenräume des verwendeten Trägermaterials läßt sich die Porengröße und/oder Porengrößenverteilung in dem Verbundwerkstoff leicht einstellen, so daß spezielle Membranen für spezielle Anwendungen hergestellt werden können.

Der erfindungsgemäße Verbundwerkstoff wird im folgenden beispielhaft beschrieben, ohne daß der erfindungsgemäße Verbundwerkstoff auf diese Ausführungsart beschränkt ist.

Der erfindungsgemäße stoffdurchlässige Verbundwerkstoff weist als Basis zumindest einen durchbrochenen und stoffdurchlässigen Träger auf Auf zumindest einer Seite des Trägers und im Inneren des Trägers weist der Träger zumindest eine anorganische Komponente auf, die im wesentlichen zumindest eine Verbindung aus zumindest einem Metall, zumindest einem Halbmetall oder zumindest einem Mischmetall mit zumindest einem Element der 3. bis 7 Hauptgruppe aufweist. Unter dem Inneren eines Trägers werden in der vorliegenden Erfindung Hohlräume oder Poren in einem Träger verstanden.

Der erfindungsgemäße stoffdurchlässige Verbundwerkstoff wird durch Aufbringen einer H Suspension, die zumindest eine, anorganische Komponente und ein Sol aufweist, auf zumindest einen durchbrochenen und stoffdurchlässigen Träger, und durch anschließendes, zumindest einmaliges Erwärmen, bei welchem die zumindest eine anorganische Komponente aufweisende Suspension auf oder in oder aber auf und in zumindest einem Träger verfestigt wird, erhalten.

Der erfindungsgemäße stoffdurchlässige Verbundwerkstoff kann aber auch durch Gasphasenabscheidung, Imprägnation oder Copräcipitation erhalten werden.

Erfindungsgemäß kann der stoffdurchlässige Verbundwerkstoff für Gase, Ionen Feststoffe oder Flüssigkeiten durchlässig sein, wobei der Verbundwerkstoff für Teilchen mit einer Größe von 0,5 nm bis 10 µm durchlässig sein kann.

Erfindungsgemäß kann der durchbrochene und stoffdurchlässige Träger Zwischenräume mit einer Größe von 0,02 bis 500 µm aufweisen. Die Zwischenräume können Poren, Maschen, Löcher, Kristallgitterzwischenräume oder Hohlräume sein. Der Träger weist zumindest ein Material, ausgewählt aus Kohlenstoff, Metallen, Legierungen, Glas, Keramiken, Mineralien, Kunststoffen, amorphen Substanzen, Naturprodukten, Verbundstoffen oder aus zumindest einer Kombination dieser Materialien, auf Die Träger, welche die vorgenannten Materialien aufweisen können, können durch eine chemische, thermische oder einer mechanischen Behandlungsmethode oder einer Kombination der Behandlungsmethoden modifiziert worden sein. Vorzugsweise weist der Verbundwerkstoff einen Träger, der zumindest ein Metall, eine Naturfaser oder einen Kunststoff aufweist auf, der nach zumindest einer mechanischen Verformungstechnik bzw. Behandlungsmethode, wie z.B. Ziehen, Stauchen, Walken, Walzen, Recken oder Schmieden modifiziert wurde. Ganz besonders bevorzugt weist der Verbundwerkstoff zumindest einen Träger, der zumindest verwobene, verklebte, verfilzte oder keramisch gebundene Fasern auf. In einer weiteren bevorzugten Ausführung kann ein perforierter Träger verwendet werden. Stoffdurchlässige Träger können auch solche sein, die durch Laserbehandlung oder Ionenstrahlbehandlung stoffdurchlässig werden oder gemacht worden sind.

Der Träger weist Fasern aus zumindest einem Material, ausgewählt aus Kohlenstoff, Metallen, Legierungen, Keramiken, Glas, Mineralien. Kunststoffen, amorphen Substanzen, Verbundstoffen und Naturprodukten oder Fasern aus zumindest einer Kombination dieser Materialien, wie z.B. Asbest, Glasfasern, Kohlefasern, Metalldrähte, Stahldrähte, Steinwollfasern, Polyamidfasern, Kokosfasern, beschichtete Fasern, aufweist. Vorzugsweise werden Träger verwendet, die verwobene Fasern aus Metall oder Legierungen aufweist. Als Fasern aus Metall können auch Drähte dienen. Ganz besonders bevorzugt weist der Verbundwerkstoff einen Träger auf, der zumindest ein Gewebe aus Stahl oder Edelstahl, wie z.B. aus Stahldrähten, Stahlfasem, Edelstahldrähten oder Edelstahlfasem durch Weben hergestellte Gewebe, aufweist, welches vorzugsweise Maschenweite von 5 bis 500 µm, besonders bevorzugt Maschenweiten von 50 bis 500 µm und ganz besonders bevorzugt Maschenweiten von 70 bis 120 µm, auf.

Der Träger des Verbundwerkstoffes kann aber auch zumindest ein Metallvlies mit einer Porenweite von 0, 1 µm bis 500 µm, vorzugsweise von 3 bis 60 µm, aufweisen.

Der erfindungsgemäße Verbundwerkstoff weist vorzugsweise zumindest einen Träger auf, der zumindest Aluminium, Silicium, Cobalt, Mangan, Zink, Vanadium, Molybdän, Indium. Blei, Wismuth, Silber, Gold, Nickel, Kupfer, Eisen, Titan, Platin, Edelstahl, Stahl, Messing, eine Legierung aus diesen Materialien oder ein mit Au, Ag, Pb, Ti, Ni, Cr, Pt, Pd, Rh, Ru und/oder Ti beschichtetes Material aufweist.

Die im erfindungsgemäßen Verbundwerkstoff vorhandene anorganische Komponente weist Die anorganische Komponente weist eine Korngröße von 0,001 bis 25 µm. Die anorganische Komponente weist zumindest eine Verbindung zumindest eines der Elemente Sc, Y, Ti, Zr, V, Nb, Cr, Mo, W, Mn, Fe, Co, B, Al, Ga In, Tl, Si, Ge, Sn, Pb, Sb oder Bi mit zumindest einem der Elemente Te, Se, S; O, Sb, As, P, N, C, Si, Ge oder Ga, wie z.B. TiO₂, Al₂O₃, SiO₂, ZrO₂, Y₂O₃, BC, SiC, Fe₃O₄, SiN, SiP, Nitride, Sulfate, Phosphide, Silicide, Spinelle oder Yttriumaluminiumgranat, oder eines dieser der Elemente selbst auf. Die anorganische Komponente kann auch Alumosilicate, Aluminiumphospate, Zeolithe oder partiell ausgetauschte Zeolithe, wie z.B. ZSM-5, Na-ZSM-5 oder Fe-ZSM-5 oder amorphe mikroporöse Mischoxide, die bis zu 20 % nicht hydrolisierbare organische Verbindungen enthalten können, wie z.B. Vanadinoxid-Siliziumoxid-Glas oder Aluminiumoxid-Siliciumoxid-Methylsiliciumsesquioxid-Gläser, aufweisen.

Vorzugsweise liegt zumindest eine anorganische Komponente in einer Korngrößenfraktion mit einer Korngröße von 1 bis 250 nm oder mit einer Korngröße von 260 bis 10000 nm vor. Es kann vorteilhaft sein, wenn der erfindungsgemäße Verbundwerkstoff zumindest zwei Korngrößenfraktionen zumindest einer anorganischen Komponente aufweist. Ebenso kann es vorteilhaft sein, wenn der erfindungsgemäße Verbundwerkstoff zumindest zwei Korngrößenfraktionen von zumindest zwei anorganuischen Komponenten aufweist. Das Korngrößenverhältnis kann von 1:1 bis 1:10000, vorzugsweise von 1:1 bis 1:100 betragen. Das Mengenverhältnis der Korngrößenfraktionen im Verbundwerkstoff kann vorzugsweise von 0,01:1 bis 1:0,01 betragen.

Die Stoffdurchlässigkeit des erfindungsgemäßen Verbundwerkstoffes wird durch die Korngröße der verwendeten zumindest einen anorganischen Komponente auf Teilchen mit einer bestimmten maximalen Größe begrenzt.

Die eine anorganische Komponente aufweisende Suspension, über welche der erfindungsgemäße Verbundwerkstoff erhältlich ist, kann zumindest eine Flüssigkeit, ausgewählt aus Wasser, Alkohol und Säure oder eine Kombination dieser Flüssigkeiten aufweisen.

Der erfindungsgemäße Verbundwerkstoff ist ohne Zerstörung der im Inneren des Trägers und/oder auf dem Träger verfestigten anorganischen Komponente auf einen kleinsten Radius von bis zu 1 mm biegbar.

Das erfindungsgemäße Verfahren zur Herstellung eines erfindungsgemäßen Verbundwerkstoffes wird im folgenden beschrieben.

Bei dem erfindungsgemäßen Verfahren zur Herstellung des erfindungsgemäßen Verbundwerkstoffes wird in und auf zumindest einen durchbrochenen und stoffdurchässigen Träger der Fasern aus zumindest einem Material, ausgewählt aus Kohlenstoff, Metallen, Legierungen, Keramiken, Glas, Mineralien, Kunststoffen, amorphen Substanzen, Verbundstoffen oder Naturprodukten oder aus zumindest einer Kombination solcher Materialien aufweist, zumindest eine Suspension gebracht, die zumindest eine anorganische Komponente aus zumindest einer Verbindung zumindest eines der Elemente Sc, Y, Ti, Zr, Nb, V, Cr, Mo, W, Mn, Fe, Co, B, Al, In, Si, Ge, Sn, Pb, Sb oder Bi mit zumindest einem der Elemente Te, Se, S, O, Sb, As, P, N, Ge, Si, C oder Ga aufweist und eine Korngröße von 1 bis 10000 nm aufweist suspendiert in einem Sol aufweist wobei die Suspension durch zumindest einmaliges Erwärmen auf eine Temperatur von 50 bis 100 °C für 10 Minuten bis 5 Stunden oder auf eine Temperatur von 100 bis 800 °C für 1 Sekunde bis 10 Minuten, auf und im Trägermaterial verfestigt wird, dadurch gekennzeichnet,
dass der Träger von einer Rolle abgerollt wird, mit einer Geschwindigkeit von 1 m/h bis 1 m/s zumindest eine Apparatur, welche die Suspension auf und in den Träger bringt und zumindest eine weitere Apparatur, welche das Verfestigen der Suspension auf und in dem Träger durch Erwärmen ermöglicht, durchläuft und der so hergestellte Verbundwerkstoff auf einer zweiten Rolle aufgerollt wird, wobei ein Sol, hergestellt durch Hydrolisieren zumindest eines Metallnitrats, Metallchlorids, Metallcarbonats, einer Metallalkoholatverbindung oder einer Halbmetallalkoholatverbindung ausgewählt aus der Verbindungen der Elemente Zr oder Si eingesetzt wird.

In dem erfindungsgemäßen Verfahren kann es vorteilhaft sein, die Suspension auf und in oder aber auf oder in zumindest einen Träger durch Aufdrucken, Aufpressen, Einpressen Aufrollen, Aufrakeln, Aufstreichen, Tauchen, Spritzen oder Aufgießen zu bringen.

Der durchbrochene und stoffdurchlässige Träger auf den oder in den oder aber auf den und in den zumindest eine Suspension gebracht wird kann zumindest ein Material, ausgewählt aus Kohlenstoff, Metallen, Legierungen, Keramiken, Mineralien, Kunststoffen, amorphen Substanzen, Naturprodukten, Verbundstoffen, Verbundwerkstoffen oder aus zumindest einer Kombination dieser Materialien aufweisen. Als stoffdurchlässige Träger können auch solche verwendet werden, die durch Behandlung mit Laserstrahlen oder Ionenstrahlen stoffdurchlässig gemacht wurden. Als Träger werden Gewebe aus Fasern oder Drähten der oben angegeben Materialien, wie z.B. Metallgewebe oder Kunststoffgewebe verwendet.

Die verwendete Suspension, die zumindest eine anorganische Komponente und zumindest ein Metalloxidsol, zumindest ein Halbmetalloxidsol oder zumindest ein Mischmetalloxidsol oder eine Mischung dieser Sole aufweisen kann, wird durch Suspendieren zumindest einer anorganischen Komponente in zumindest einem dieser Sole hergestellt.

Die Sole werden durch Hydrolisieren zumindest einer Verbindung, vorzugsweise zumindest einer Metallverbindung, zumindest einer Halbmetallverbindung oder zumindest einer Mischmetallverbindung mit zumindest einer Flüssigkeit, einem Feststoff oder einem Gas erhalten, wobei es vorteilhaft sein kann, wenn als Flüssigkeit z.B. Wasser, Alkohol oder eine Säure, als Feststoff Eis oder als Gas Wasserdampf oder zumindest eine Kombination dieser Flüssigkeiten, Feststoffe oder Gase eingesetzt wird. Ebenso kann es vorteilhaft sein die zu hydrolisierende Verbindung vor der Hydrolyse in Alkohol oder eine Säure oder eine Kombination dieser Flüssigkeiten zu geben. Als zu hydrolisierende Verbindung wird zumindest ein Metallnitrat, ein Metallchlorid, ein Metallcarbonat eine Metallalkoholatverbindung oder zumindest eine Halbmetallalkoholatverbindung ausgewählt aus den Verbindungen der Elemente Zr und Si wie z.B. Siliziumalkoholate, Zirkoniumalkoholate, oder Zirkoniumnitrat, hydrolisiert. Es kann vorteilhaft sein, die Hydrolyse der zu hydrolisierenden Verbindungen mit zumindest dem halben Molverhältnis Wasser, Wasserdampf oder Eis, bezogen auf die hydrolisierbare Gruppe, der hydrolisierbaren Verbindung, durchzuführen.

Die hydrolisierte Verbindung kann zum Peptisieren mit zumindest einer organischen oder anorganischen Säure, vorzugsweise mit einer 10 bis 60 %-igen organischen oder anorganischen Säure, besonders bevorzugt mit einer Mineralsäure, ausgewählt aus Schwefelsäure, Salzsäure, Perchlorsäure, Phosphorsäure und Salpetersäure oder einer Mischung dieser Säuren behandelt werden.

Es können nicht nur Sole verwendet werden, die wie oben beschrieben hergestellt wurden, sondern auch handelsübliche Sole, wie z.B. Zirkonnitratsol oder Silicasol.

Zumindest eine anorganische Komponente, weiche eine Korngöße von 1 bis 10000 nm aufweist wird, in zumindest einem Sol suspendiert. Vorzugsweise wird zumindest eine anorganische Komponente, die zumindest eine Verbindung aus den Oxiden der Nebengruppenelemente oder den Elementen der 3. bis 5. Hauptgruppe, vorzugsweise Oxide ausgewählt aus den Oxiden der Elemente Sc, Y, Ti, Zr, Nb, Ce, V, Cr, Mo, W, Mn, Fe, Co, B, Al, In, Tl, Si, Ge, Sn, Pb und Bi, wie z.B. Y₂O₃, ZrO₂, Fe₂O₃, Fe₃O₄, SiO₂, Al₂O₃ aufweist, suspendiert. Die anorganische Komponente kann auch Alumosilicate, Aluminiumphospate, Zeolithe oder partiell ausgetauschte Zeolithe, wie z.B. ZSM-5, Na-ZSM-5 oder Fe-ZSM-5 oder amorphe mikroporöse Mischoxide, die bis zu 20 % nicht hydrolisierbare organische Verbindungen enthalten können, wie z.B. Vanadinoxid-Siliziumoxid-Glas oder Aluminiumoxid-Siliciumoxid-Methylsiliciumsesquioxid-Gläser, aufweisen.

Vorzugsweise beträgt der Massenanteil der suspendierten Komponente das 0, bis 500-fache der eingesetzten hydrolisierten Verbindung.

Durch die geeignete Wahl der Korngröße der suspendierten Verbindungen in Abhängigkeit von der Größe der Poren, Löcher oder Zwischenräume des durchbrochenen stoffdurchlässigen Trägers, aber auch durch die Schichtdicke des erfindungsgemäßen Verbundwerkstoffes sowie das anteilige Verhältnis Sol-Lösungsmittel-Metalloxid läßt sich die Rißfreiheit im erfindungsgemäßen Verbundwerkstoff optimieren.

Bei der Verwendung eines Maschengewebes mit einer Maschenweite von z.B. 100 µm können zur Erhöhung der Rißfreiheit vorzugsweise Suspensionen verwendet werden, die eine suspendierte Verbindung mit einer Korngröße von mindestens 0,7 µm aufweist. Im allgemeinen sollte das Verhältnis Korngröße zu Maschen- bzw Porengröße von 1:1000 bis 50:1000 betragen. Der erfindungsgemäße Verbundwerkstoff weist eine Dicke von 5 bis 150 µm auf. Die Suspension aus Sol und zu suspendierenden Verbindungen weist vorzugsweise ein Verhältnis Sol zu zu suspendierenden Verbindungen von 0,1:100 bis 100:0,, vorzugsweise von 0,1:10 bis 10:0,1 Gewichtsteilen auf.

Erfindungsgemäß kann die auf oder im oder aber auf und im Träger vorhandenen Suspension durch Erwärmen dieses Verbundes auf 50 bis 1000 °C verfestigt werden. In einer besonderen Ausführungsvariante des erfindungsgemäßen Verfahrens wird dieser Verbund für 10 min bis 5 Stunden einer Temperatur von 50 bis 100 °C ausgesetzt. In einer weiteren besonderen Ausführungsart des erfindungsgemäßen Verfahrens wird dieser Verbund für 1 Sekunde bis 10 Minuten einer Temperatur von 100 bis 800 °C ausgesetzt.

Das erfindungsgemäße Erwärmen des Verbundes kann mittels erwärmter Luft, Heißluft, Infrarotstrahlung, Mikrowellenstrahlung oder elektrisch erzeugter Wärme, erfolgen. In einer besonderen Ausführungsart des erfindungsgemäßen Verfahrens kann es vorteilhaft sein, wenn das Erwärmen des Verbundes unter Nutzung des Trägermaterials als elektrische Widerstandheizung erfolgt. Zu diesem Zweck kann über zumindest zwei Kontakte der Träger an eine Stromquelle angeschlossen werden. Je nach Stärke der Stromquelle und Höhe der abgegebenen Spannung heizt sich der Träger bei eingeschaltetem Strom auf und die in und auf seiner Oberfläche vorhandene Suspension kann durch diese Erwärmung verfestigt werden.

In einer weiteren besonders bevorzugten Ausführungsart des erfindungsgemäßen Verfahrens kann das Verfestigen der Suspension dadurch erreicht werden, daß die Suspension auf oder in oder aber auf und in einen vorgewärmten Träger gebracht wird und somit direkt nach dem Aufbringen verfestigt wird.

Im erfindungsgemäßen Verfahren wird zumindest ein Träger von einer Rolle abgerollt, mit einer Geschwindigkeit von 1 m/h bis 1 m/s zumindest eine Apparatur, bringt die Suspension auf oder in oder auf und in den Träger und zumindest eine weitere Apparatur verfestigt die Suspension auf und in dem Träger durch Erwärmen und der so hergestellte Verbundwerkstoff wird auf einer zweiten Rolle aufgerollt. Auf diese Weise ist es möglich, den erfindungsgemäßen Verbundwerkstoff im Durchlaufverfahren herzustellen.

In einer weiteren besonderen Ausführungsart des erfindungsgemäßen Verfahrens kann es vorteilhaft sein, wenn auf einen Träger, der ein Verbundwerkstoff, ein erfindungsgemäßer Verbundwerkstoff oder ein nach dem erfindungsgemäßen Verfahren hergestellten Verbundwerkstoff sein kann, eine keramische oder anorganische Schicht aufgebracht wird. Dies kann zum Beispiel dadurch erfolgen, daß eine grüne (ungesinterte) Keramikschicht oder eine anorganische Schicht, die z.B. auf einer Hilfsfolie vorliegt, auf den Träger auflaminiert wird oder daß der Verbundwerkstoff mit einer weiteren Suspension wie oben beschrieben behandelt werden kann.. Dieser Verbund kann durch Aufheizen, z.B. durch Infrarotstrahlung oder einen Ofen, verfestigt werden.

Die verwendete grüne Keramikschicht weist vorzugsweise nanokristallines Pulver von zumindest einem Halbmetall- oder Metalloxid, wie z.B. Aluminiumoxid, Titandioxid oder Zirkoniumdioxid, auf. Die grüne Schicht kann außerdem einen organischen Binder aufweisen.

Durch die Verwendung einer grünen Keramikschicht ist es auf einfache Weise möglich den erfindungsgemäßen Verbundwerkstoff mit einer zusätzlichen keramischen Schicht auszustatten, die je nach verwendeter Größe des nanokristallinen Pulvers, die Stoffdurchlässigkeit des so hergestellten Verbundwerkstoffes auf kleinste Partikel begrenzt.

Vorzugsweise weist die grüne Schicht nanokristallines Pulver mit einer Korngröße von 1 bis 1000 nm auf. Wird nanokristallines Pulver mit Komgrößen von 1 bis 10 nm eingesetzt so weist der erfindungsgemäße Verbundwerkstoff auf den eine zusätzliche keramische Schicht aufgebracht wurde eine Stoffdurchlässigkeit für Teichen mit einer Größe auf, die der Korngröße des verwendeten Pulvers entspricht. Wird nanokristallines Pulver mit einer Größe über 10 nm eingesetzt, so wird die keramische Schicht für Teilchen durchlässig, die halb so groß wie die Teilchen des eingesetzten nanokristallinen Pulvers sind.

Durch das Aufbringen zumindest einer weiteren anorganischen Schicht oder Keramikschicht erhält man einen erfindungsgemäßen Verbundwerkstoff, der einen Porengradienten aufweist. Zudem ist es durch mehrmaliges Aufbringen einer Schicht möglich, zur Herstellung von Verbundwerkstoffen mit einer bestimmten Porengröße auch solche Träger zu verwenden, deren Poren- bzw. Maschenweite zur Herstellung eines Verbundwerkstoffes mit der geforderten Porengröße nicht geeignet ist. Dies kann z.B. der Fall sein, wenn ein Verbundwerkstoff mit einer Porengröße von 0,25 µm unter Verwendung eines Trägers mit einer Maschenweite von über 300 µm hergestellt werden soll. Zum Erhalt eines solchen Verbundwerkstoffes kann es vorteilhaft sein, auf den Träger zuerst zumindest eine Suspension zu bringen, die geeignet ist Träger mit einer Maschenweite von 300 µm zu behandeln und diese Suspension nach dem Aufbringen zu verfestigen Der auf diese Weise erhaltene Verbundwerkstoff kann nun als Träger mit einer geringeren Maschen- bzw. Porengröße eingesetzt werden. Auf diesen Träger kann z.B. eine weitere Suspension aufgebracht werden, die z.B. eine Verbindung mit einer Korngröße von 0,5 µm aufweist.

Die Rißunempfindlichkeit bei Verbundwerkstoffen mit großen Maschen- bzw. Porenweiten kann auch dadurch verbessert werden, daß Suspensionen auf den Träger aufgebracht werden, die zumindest zwei suspendierte Verbindungen aufweisen. Vorzugsweise werden zu suspendierende Verbindungen verwendet, die ein Korngrößenverhältnis von 1:1 bis 1:10, besonders bevorzugt von 1:1,5 bis 1:2,5 aufweisen. Der Gewichtsanteil von der Korngößenfraktion mit der kleineren Korngröße sollte einen Anteil von höchstens 50 %, vorzugsweise von 20 % und ganz besonders bevorzugt von 10 %, an dem Gesamtgewicht der eingesetzten Korngrößenfraktionen nicht überschreiten.

Trotz des Aufbringens einer zusätzlichen Keramikschicht bzw. anorganischen Schicht auf den Träger kann der erfindungsgemäße Verbundwerkstoff biegbar sein.

Der erfindungsgemäße Verbundwerkstoff kann auch dadurch hergestellt werden, daß ein Träger, der z.B. ein erfindungsgemäßer Verbundwerkstoff oder ein anderes geeignetes Trägermaterial sein kann, auf einen zweiten Träger, der aus dem selben Material wie der erste Träger oder einem anderen Material oder aus zwei Trägern unterschiedlicher Stoffdurchlässigkeit bzw. Porösität bestehen kann, gelegt wird. Zwischen die beiden Trägermaterialien kann ein Spacer, ein Drainagematerial oder ein anderes zur Ableitung von Stoffen geeignetes Material, z.B. eine Gewebeverbund eingelegt werden. Die Kanten der beiden Träger werden, z.B. durch Löten, Schweißen oder Kleben miteinander verbunden. Das Kleben kann mit handelsüblichen Klebern oder Klebeband erfolgen. Auf so vorbereiteten Trägerverbund kann die Suspension auf die oben beschriebenen Weisen aufgebracht werden.

In einer besonders bevorzugten Ausführungsart können die aufeinander gelegten Träger, zwischen denen zumindest ein Spacer, ein Drainagematerial oder ähnliches angeordnet sein kann, vor oder nach, vorzugsweise nach dem Verbinden der Kanten der Träger, aufgerollt werden. Durch verwenden dicker oder dünner Klebebänder zum Verbinden der Kamen der Träger kann der Abstand zweier beim Aufrollen übereinanderliegender Trägerverbunde beeinflußt werden. Auf solche gewickelten Trägerverbunde kann eine wie oben beschriebene Suspension, z.B. durch Tauchen in eine Suspension, aufgebracht werden. Mit Hilfe von Druckluft läßt sich nach dem Tauchen der Trägerverbund von überschüssiger Suspension befreien. Die auf den Trägerverbund aufgebrachte Suspension läßt sich wie oben beschrieben verfestigen. Ein so hergestellter Verbundwerkstoff kann als formselektive Membran in einem Wickelmodul verwendet werden.

In einer weiteren besonderen Ausführungsform des erfindungsgemäßen Verfahrens kann der erwähnte Trägerverbund auch dadurch hergestellt werden, daß jeweils von einer Rolle zwei Träger und wenn vorgesehen zumindest ein Spacer abgerollt werden, und dann übereinander gelegt werden. Das Verbinden der Kanten der Träger kann wiederum durch Löten, Schweißen, Kleben oder durch andere geeignete Verfahren zum Verbinden von flachen Körpern erfolgen. Auf den so hergestellten Trägerverbund kann dann die Suspension aufgebracht werden. Dies kann z.B. dadurch erfolgen, daß der Trägerverbund mit der Suspension besprüht oder bestrichen wird oder daß der Trägerverbund durch eine Wanne geführt wird, in der die Suspension vorhanden ist. Die Aufgebrachte Suspension wird nach einer der vorgenannten Methoden verfestigt. Der so hergestellte Verbundwerkstoff kann auf eine Rolle aufgewickelt werden. Auf einen so beschriebenen Werkstoff kann durch nochmaliges Aufbringen und Verfestigen einer weiteren Suspension eine weitere anorganische Schicht auf- und/oder eingebracht werden. Durch die Verwendung verschiedener Suspensionen lassen sich die Materialeigenschaften je nach Wunsch bzw je nach Verwendungszweck einstellen. Es können auf diesen Verbundwerkstoff nicht nur weitere Suspensionen aufgebracht werden, sondern auch ungesinterte keramische und/oder anorganische Schichten, die durch Auflaminieren wie oben beschrieben erhältlich sind. Die beschriebene Ausführungsart des erfindungsgemäßen Verfahrens kann kontinuierlich oder diskontinuierlich, vorzugsweise kontinuierlich betrieben werden. Ein so hergestellter Verbundwerkstoff kann als formselektive Membran in einem Flachmodul verwendet werden.

Der Träger im Verbundwerkstoff kann, je nach verwendetem Trägermaterial, wieder entfernt werden, so daß ein keramischer Werkstoff entsteht, der keinerlei Trägermaterial mehr aufweist. Wird als Trägermaterial z.B. ein Naturstoff, wie z.B. ein Baumwollvlies verwendet, so kann dieses in einem geeigneten Reaktor durch Oxidation aus dem Verbundwerkstoff entfernt werden. Ist als Trägermaterial ein Metall, wie z.B. Eisen verwendet worden, so kann dieser Träger durch Behandeln des Verbundwerkstoffes mit Säuren, vorzugsweise mit konzentrierter Salzsäure, aus dem Verbundwerkstoff herausgelöst werden. Bestand der Verbundwerkstoff außerdem aus Zeolith, so lassen sich flache Zeolith-Formkörper herstellen, die für die formseleictive Katalyse geeignet sind.

Es kann vorteilhaft sein, den erfindungsgemäßen Verbundwerkstoff als Träger für die Herstellung eines erfindungsgemäßen Verbundwerkstoffes zu verwenden.

Der erfindungsgemäße Verbundwerkstoff kann als Filter oder Membran zur Auftrennung von Stoffgemischen verwendet werden. Insbesondere kann der erfindungsgemäße Verbundwerkstoff als Filter zur Auftrennung von Flüssigkeitsgemischen, Gasgemischen, zumindest eine Flüssigkeit und zumindest ein Gas enthaltenden Gemischen, zumindest einen Feststoff und zumindest eine Flüssigkeit enthaltenden Gemischen und zumindest ein Gas und zumindest einen Feststoff oder zumindest eine Flüssigkeit oder ein Gas enthaltenden Gemischen eingesetzt werden.

Da der erfindungsgemäße Verbundwerkstoff relativ robust ist kann er auch als Filter oder Membran in druckbetriebenen Auftrennprozessen verwendet werden.

Besonders vorteilhaft kann der Verbundwerkstoff als Membran zur Mikrofiltration, Ultrafiltration oder Nanofiltration eingesetzt werden.

Der erfindungsgemäße Verbundwerkstoff kann auch als Diaphragma oder Batterieseparator eingesetzt werden.

Je nach Ausführungsart des erfindungsgemäßen Verbundwerkstoffes kann dieser in katalytischen Prozessen verwendet werden. Dies ist besonders dann der Fall, wenn der Verbundwerkstoff einen Träger oder eine anorganische Komponente aufweist, die katalytische Eigenschaften besitzen, wie z.B. Träger aus Edelmetallgeweben wie z.B. Platinnetze oder z.B. katalytisch aktive Zeolithe als anorganische Komponente.

Es kann vorteilhaft sein, bevorzugte Ausführungsarten des erfindungsgemäßen Verfahrens mit zumindest einer weiteren bevorzugten Ausführungsart des erfindungsgemäßen Verfahrens zu kombinieren. Ebenso kann es vorteilhaft sein, bevorzugte Ausführungsarten des erfindungsgemäßen Verbundwerkstoffes mit zumindest einer weiteren besonderen Ausführungsart oder -form des erfindungsgemäßen Verbundwerkstoffes zu kombinieren. Dem Fachmann erschließen sich mit Kenntnis der vorliegenden Erfindung weitere Ausführungsarten des erfindungsgemäßen Verfahrens, des erfindungsgemäßen Verbundwerkstoffes und/oder weitere Verwendungsmöglichkeiten für das erfindungsgemäße Verfahren bzw. den erfindungsgemäßen Verbundwerkstoff.

Die erfindungsgemäße Suspension wird durch die nachfolgenden Beispiele 1.5-1.7, 1.9, 1.16-1.18 beschrieben, ohne darauf beschränkt zu sein. Die übrigen Beispiele sind Vergleichsbeispiele.

### Vergleichsbeispiel 1.1

120g Titantetraisopropylat werden mit 140g entionisiertem Eis unter kräftigem Rühren bis zur Feinstverteilung des entstehenden Niederschlages gerührt. Nach Zugabe von 100g 25 %-ige Salzsäure wird bis zu Klarwerden der Phase gerührt und 280g Aluminiumoxid des Typs CT3000SG der Fa. Alcoa, Ludwigshafen, zugegeben und über mehrere Tage bis zum Auflösen der Aggregate gerührt. Die Suspension wird anschließend verwendet.

### Vergleichsbeispiel 1.2

80 g Titantetraisopropylat werden mit 20 g Wasser hydrolysiert und der entstandene Niederschlag wird mit 120 g Salpetersäure (25 %-ig) peptisiert. Diese Lösung wird bis zum Klarwerden gerührt und nach Zugabe von 40 g Titandioxid der Fa. Degussa (P25) wird bis zum Auflösen der Agglomerate gerührt. Die Suspension wird anschließend verwendet.

### Vergleichsbeispiel 1.3

90 g Titanisopropylat werden mit 40 g Ethanol versetzt und mit 10 g Wasser hydrolysiert, Das dabei ausfallende Gel wird mit 80 g einer 30 %-igen Schwefelsäure peptisiert und nach vollständigem Auflösen des Gels werden 30 g Aluminiumoxid der Fa. Degussa zugegeben und bis zum Auflösen der Agglomerate gerührt. Diese Suspension kann anschließend verwendet werden.

### Vergleichsbeispiel 1.4

20 g Aluminiumtriisopropylat werden in 10 g Ethanol vorgelegt und mit 5 g Wasser hydrolysiert. Das entstehende Gel wird mit 45 g Salpetersäure (15 %-ig) peptisiert und bis zum vollständigen Auflösen des Gels gerührt. Nach Zugabe von 60 g Vanadiumpentoxid der Fa. Aldrich und rühren bis zur vollständigen Lösung der Agglomerate kann die Suspension eingesetzt werden.

### Beispiel 1.5

20 g Zirkoniumtetraisopropylat werden mit 15 g Wasser hydrolysiert und der entstehende Niederschlag wird mit 30 g Salpetersäure (25 %-ig) peptisiert. Nach vollständigem Lösen des Niederschlages wird nach Zugabe von 60 g Zeolith Y (Typ CBV 780 der Fa. Zeolyst) bis zum vollständigen Lösen der Agglomerate gerührt und diese Suspension eingesetzt.

### Beispiel 1.6

20 g Zirkoniumtetraisopropylat werden mit 15 g Wasser hydrolysiert und der entstehende Niederschlag wird mit 30 g Salpetersäure (25 %-ig) peptisiert. Nach vollständigem Lösen des Niederschlages wird nach Zugabe von 10 g Zirkoniumdioxid der Fa. Degussa (Teilchengröße 50 nm) bis zum vollständigen Lösen der Agglomerate gerührt und diese Suspension eingesetzt.

### Beispiel 1.7

20 g Zirkoniumtetraisopropylat werden mit 15 g Wasser hydrolysiert und der entstehende Niederschlag wird mit 30 g Salpetersäure (25 %-ig) peptisiert. Nach vollständigem Lösen des Niederschlages wird nach Zugabe von 60 g Korundpulver der Teilchengröße 10 Mikrometer (Amperit, HC Stark) bis zum vollständigen Lösen der Agglomerate gerührt und diese Suspension eingesetzt.

### Vergleichsbeispiel 1.8

40 g Titanisopropylat und 30 g Methyltriethoxysilan werden mit 60 g Ethanol versetzt und mit 10 g Wasser hydrolysiert. Das dabei ausfallende Gel wird mit 60 g einer 30 %-igen Salzsäure peptisiert und nach vollständigem Auflösen des Gels werden 90 g amorphe mikroporöse Mischoxide (vgl. DE 19545042) zugegeben und bis zum Auflösen der Agglomerate gerührt. Diese Suspension kann anschließend verwendet werden.

### Beispiel 1.9

70 g Tetraethoxysilan werden mit 20 g Wasser hydrolysiert und der entstandene Niederschlag wird mit 120 g Salpetersäure (25 %-ig) peptisiert. Diese Lösung wird bis zum Klarwerden gerührt und nach Zugabe von 40 g amorpher Kieselsäure oder amorphem Siliciumdioxids der Fa. Degussa bis zum Auflösen der Agglomerate gerührt und die Suspension wird anschließend verwendet.

### Vergleichsbeispiel 1.10

80 g Titantetraisopropylat werden mit 20 g Wasser hydrolysiert und der entstandene Niederschlag wird mit 120 g Salpetersäure (25 %-ig) peptisiert. Diese Lösung wird bis zum Klarwerden gerührt und nach Zugabe von 20 g Titandioxid der Fa. Degussa (P25) und 40 g Titandioxids in der Anatase-Form wird bis zum Auflösen der Agglomerate gerührt und die Suspension wird anschließend verwendet.

### Vergleichsbeispiel 1.11

40 g Titantetraisopropylat werden mit 20 g Wasser hydrolysiert und der entstandene Niederschlag wird mit 60 g Salpetersäure (25 %-ig) peptisiert. Diese Lösung wird bis zum Klarwerden gerührt und nach Zugabe von 40 g Zinnoxid der Fa. Aldrich wird bis zum Auflösen der Agglomerate gerührt die Suspension wird anschließend verwendet.

### Vergleichsbeispiel 1.12

80 g Titantetraisopropylat werden mit 40 g Wasser hydrolysiert und der entstandene Niederschlag wird mit 120 g Salzsäure (25 %-ig) peptisiert. Diese Lösung wird bis zum Klarwerden gerührt und nach Zugabe von 200 g Titandioxid der Fa. Bayer wird bis zum Auflösen der Agglomerate gerührt die Suspension wird anschließend verwendet.

### Vergleichsbeispiel 1.13

120 g Titantetraisopropylat werden mit 140 g entionisiertem Eis unter kräftigem Rühren bis zur Feinstverteilung des entstehenden Niederschlages gerührt. Nach Zugabe von 100 g 25 %-ige Salpetersäure wird bis zu Klarwerden der Phase gerührt und 280 g Aluminiumoxid des Typs CT3000SG der Fa. Alcoa, Ludwigshafen, zugegeben und über mehrere Tage bis zum Auflösen der Aggregate gerührt. Die Suspension wird anschließend verwendet.

### Vergleichsbeispiel 1.14

20 g Titantetraisopropylat und 120 g Titanhydroxid-hydrat (S500-300, Versuchsprodukt der Fa. Rhone- Poulenc wurden mit 45 g Wasser hydrolysiert bzw, gelöst und mit 50 g einer 25 %-igen. Salzsäure peptisiert. Nach Klarwerden und Zugabe von 300 g Aluminiumoxid (7988 E330, der Fa. Norton Materials) und 50 g Eisen(III)chlorid wird bis zum Auflösen der Agglomerate gerührt. Die Suspension kann anschließend verwendet werden.

### Vergleichsbeipiel 1.15

6 g Titantetrachlorid wurden mit 10 g einer 25 %-igen Salzsäure hydrolisiert. Nach Klarwerden und Zugabe von 13 g Aluminiumoxid (7988 E330, der Fa. Norton Materials) und 2 g Rhutheniumchlorid wurde bis zum Auflösen der Agglomerate gerührt. Die Suspension kann anschließend verwendet werden.

### Beispiel 1.16

20 g Zirkonnitratsol (30 %ig der Fa. MEL Chemicals wurden mit 150 g Wasser , 25 g Titandioxid (Finntianx 78173 der Fa. Kemira Pigments und 210 g Glasmehl (HK der Fa. Robert Reidt) verrührt. Die Suspension kann anschließend verwendet werden.

### Beispiel 1.17

10 g Zirkonnitratsol (30 %-ig der Fa. MEL Chemicals und 50 g Titandioxid-Filterkuchen-Versuchsprodukt der Fa. Sachtzleben wurden mit 150 g Wasser , 290 g Aluminiumoxid 713-40 RA der Fa Nabaltec bis zum Auflösen der Agglomerate gerührt. Die Suspension kann anschließend verwendet werden.

### Beispiel 1.18

100 g Silicasol (Levasil 200, der Fa. Bayer AG) wurden mit 180 g Aluminiumoxid AA07 der Fa. Sumitomo Chemical bis zum Auflösen der Agglomerate gerührt. Die Suspension kann anschließend verwendet werden.

### Vergleichsbeispiel 1.19

50 g Titantetraethoxylat wurden mit 270 g Wasser hydrolysiert und mit 30 g Salpetersäure (25 %-ig) peptisiert. Anschließend wurden 100 g Ethanol und 350 g CT 2000 SG der Fa. Alcoa zugegeben und verrührt. Die Suspension kann anschließend verwendet werden.

### Vergleichsbeispiel 2.1

Eine Suspension nach Beispiel 1.13 wird auf ein Quadratinaschengewebe mit einer Maschenweite von 90 µm aufgerakelt und durch Beblasen mit heißer Luft, die eine Temperatur von 450 °C aufwies, innerhalb von 7 sec. getrocknet. Es wurde ein flächiger Verbundwerkstoff erhalten der als Mikrofiltrationsmembran mit einer Porenweite von 0,2 bis 0,4 um eingesetzt werden kann. Der Verbundwerkstoff ist bis auf einen Radius von 2 mm biegbar, ohne daß der Verbundwerkstoff zerstört wird.

### Vergleichsbeispiel 2.2

Eine Suspension nach Beispiel 1.2 wurde auf einen wie in Beispiel 2.1 beschriebenen Verbundwerkstoff durch Aufrollen mit einer Schichtdicke von 10 um aufgetragen. Das Verfestigen der Suspension erfolgte wiederum durch Bebtasen des Verbundes mit 450 °C heißer Luft für eine Dauer von 5 sec. Es wurde ein Verbundwerkstoff erhalten, der als Nanofiltrationsmembran eingesetzt werden kann und der eine Porenweite von 30 - 40 nm aufwies.

### Vergleichsbeispiel 2.3

Eine Suspension nach Beispiel 1.10 wurde auf die Innenseite eines gesintertes Metallrohres mit einer Porengröße von 250 um gesprüht. Das Trocknen der Suspension erfolgte durch ca. 6 Sekunden langes Durchblasen des Rohres mit 450 °C heißer Luft. Auf diese Weise wurde eine durch UV-Licht anregbare katalytische Schicht in das Rohrinnere gebracht, die sich für den Abbau organischer Bestandteile in Wasser eignet.

### Vergleichsbeispiel 2.4

Ein keramisches Trägerrohr für Filtrationszwecke (7-Kanal-Titandioxid/Aluminiumdioxidrohr mit einer Länge von 300 mm und einer Porenweite von 4 µm) der Firma CTI wurde in eine Suspension nach Beispiel 1.4 für 10 Sekunden gefüllt. Nach der Trocknung bei 450 °C für 10 Minuten wurde ein mit einer porösen, fur Oxidationsreaktionen katalytisch aktiven Schicht ausgestattetes keramisches Trägerrohr erhalten, welches in der Katalyse verwendet werden kann.

### Vergleichsbeispiel 2.5

Auf GORE-TEX®, eine gereckte Polymermembran der Fa. Gore wurde durch Aufrollen eine Suspension nach Beispiel 1.8 aufgebracht. Die Trocknung erfolgte dadurch, daß der Verbund aus Suspension und Träger in einem Ofen für 30 min einer Temperatur von 80 °C ausgesetzt wurde. Es ist mit diesem Verfahren erstmals gelungen einen Verbundwerkstoff herzustellen, der aus einer hydrophoben Membran und auf- bzw. eingebrachten Metalloxiden besteht Dieser Verbundwerkstoff kann ebenfalls in der Filtrationstechnik eingesetzt werden.

Durch Einpressen einer Suspension nach Beispiel 1.5 in ein Wollvlies und anschließender Trocknung dadurch, daß der Verbund aus Vlies und Suspension in einem Ofen für 120 min. einer Temperatur von 60 °C ausgesetzt wurde, wurde ein Zeolith-Formkörper als Verbundwerkstoff erhalten, der für die formselektive Katalyse geeignet ist. Die Träger lassen sich, nach Einbau in geeignete Reaktoren, durch Oxidationsprozesse wieder entfernen.

### Vergleichsbeispiel 2.7

Eine keramische Mikrofiltrationsmembran (α-Al₂O₃, Typ 19/3.3) der Firma Atech wurde in eine Suspension nach Beispiel 1.6 getaucht. Die anschließende Trocknung erfolgte durch Beblasen des Verbundes aus Suspension und keramischer Membran mit 450 °C heißer luft für 10 Minuten. Es wurde eine Filtrationsmembran erhalten, die einen Porenradius von 4 nm aufweist.

### Vergleichsbeispiel 2.8

Auf eine poröse Polyethylenfolie wurde durch Aufrollen eine Suspension nach Beispiel 1.8 aufgebracht. Die Trocknung erfolgte dadurch, daß der Verbund aus Suspension und Träger in einem Ofen für 30 min. einer Temperatur von 80 °C ausgesetzt wurde. Es ist mit diesem Verfahren erstmals gelungen einen Verbundwerkstoff herzustellen, der aus einer hydrophoben Membran und auf- bzw. eingebrachten Metalloxiden besteht. Dieser Verbundwerkstoff kann ebenfalls in der Filtrationstechnik eingesetzt werden.

### Vergleichsbeispiel 3.1

Auf einen als Träger verwendeten, wie in Beispiel 2.1 hergestellten Verbundwerkstoff, wird durch Aufstreichen eine wie in Beispiel 1.13 hergestellte Suspension aufgebracht, wobei statt Aluminiumoxid des Typs CT3000SG die gleiche Menge eines Aluminiumoxid mit einer Korngröße von 250 nm (Permalox, Alcoa) verwendet wurde. Durch Beblasen mit heißer Luft, die eine Temperatur von 450 °C aufwies, wurde die Suspension innerhalb von 2 sec. getrocknet. Es wurde ein flächiger Verbundwerkstoff erhalten, der als Mikrofiltrationsmembran mit einer Porenweite von 0,15 µm eingesetzt werden kann. Der Verbundwerkstoff ist bis auf einen Radius von 2 mm biegbar, ohne daß der Verbundwerkstoff zerstört wird.

### Vergleichsbeispiel 3.2

Auf einen als Träger verwendeten, wie in Beispiel 2.1 hergestellten Verbundwerkstoff wurde eine ungesinterte Schicht aus nanokristallinem Zirkoniumdioxid mit einer mittleren Teilchengröße von 5 nm, eingebettet in eine und Polyvinylalkoholfolie, die durch Aufrakeln einer 10 %-igen Lösung von Polyvinylalkohol der Fa. Sigma (MW 100000) in Wasser hergestellt wurde, auflaminiert und innerhalb einer Minute mittels Infrarotstrahlung verfestigt. Man erhält einen biegbaren Verbundwerkstoff der eine Stoffdurchlässlakeit für Teilchen mit einer Größe von 4 bis 6 nm aufweist.

### Vergleichsbeispiel 3.3

Auf einen als Träger verwendeten, wie in Beispiel 2.1 hergestellten Verbundwerkstoff, wurde durch Aufstreichen eine wie in Beispiel 1.1 hergestellte Suspension aufgebracht, wobei statt Aluminiumoxid des Typs CT3000SG eine Mischung eines Aluminiumoxids mit einer Korngröße von 450 nm (A16, Alcoa) und 1,2 µm (CT3000SG, Alcoa) im Gewichtsverhältnis 20:80 verwendet wurde. Durch Beblasen mit heißer Luft, die eine Temperatur von 450 °C aufwies, wurde die Suspension innerhalb von 2 Sekunden getrocknet. Es wurde ein flächiger Verbundwerkstoff erhalten, der als Mikrofiltrationsmembran mit einer Porenweite von 0,012 µm eingesetzt werden kann. Der Verbundwerkstoff ist bis auf einen Radius von 2 mm biegbar, ohne daß der Verbundwerkstoff zerstört wird.

## Patentansprüche

1. Biegbarer, stoffdurchlässiger Verbundwerkstoff auf Basis zumindest eines durchbrochenen und stoffdurchlässigen Trägers, der auf zumindest einer Seite des Trägers und im Inneren des Trägers zumindest eine anorganische Komponente aufweist, die durch Aufbringen einer Suspension, die zumindest eine, eine Verbindung zumindest eines der Elemente Sc, Y, Ti, Zr, Nb, V, Cr, Mo, W, Mn, Fe, Co, B, Al, In, Tl, Si, Ge, Sn, Pb, Sb oder Bi mit zumindest einem der Elemente Te, Se, S, O, Sb, As, P, N, Ge, Si, C oder Ga aufweisende, anorganische Komponente die eine Korngröße von 1 bis 10000 nm aufweist suspendiert in einem Sol aufweist, auf zumindest einen durchbrochenen und stoffdurchlässigen Träger, der Fasern aus zumindest einem Material, ausgewählt aus Kohlenstoff, Metallen, Legierungen, Keramiken, Glas, Mineralien, Kunststoffen, amorphen Substanzen, Verbundstoffen oder Naturprodukten oder aus zumindest einer Kombination solcher Materialien aufweist und zumindest einmaliges Erwärmen auf eine Temperatur von 50 bis 100 °C für 10 Minuten bis 5 Stunden oder auf eine Temperatur von 100 bis 800 °C für 1 Sekunde bis 10 Minuten, bei welchem die zumindest eine anorganische Komponente aufweisende Suspension auf und im Träger verfestigt wird, erhältlich ist,
**dadurch gekennzeichnet,**
**dass** der Verbundwerkstoff eine Dicke von 5 bis 150 µm aufweist und bis zu einem Radius von.1 mm biegbar ist und
**dass** ein Sol, hergestellt durch Hydrolisieren , zumindest eines Metallnitrats, Metallchlorids, Metallcarbonats, einer Metallalkoholatverbindung oder einer Halbmetallalkoholatverbindung ausgewählt aus den Verbindungen der Elemente Zr oder Si eingesetzt wird.

2. Verbundwerkstoff nach Anspruch 1,
**dadurch gekennzeichnet,**
**dass** der Verbundwerkstoff für Gase, Feststoffe oder Flüssigkeiten durchlässig ist.

3. Verbundwerkstoff nach Anspruch 1 oder 2,
**dadurch gekennzeichnet,**
**dass** der Verbundwerkstoff für Teilchen mit einer Größe von 0,5 nm bis 10 µm durchlässig ist.

4. Verbundwerkstoff nach zumindest einem der Ansprüche 1 bis 3,
**dadurch gekennzeichnet,**
**dass** der durchbrochene und stoffdurchlässige Träger Zwischenräume mit einer Größe von 0,02 bis 500 µm aufweist.

5. Verbundwerkstoff nach zumindest einem der Ansprüche 1 bis 4,
**dadurch gekennzeichnet,**
**dass** der Träger mit zumindest einer Methode, ausgewählt aus thermischer, mechanischer und chemischer Behandlung oder einer Kombination dieser Behandlungsarten modifiziert wurde.

6. Verbundwerkstoff nach zumindest einem der Ansprüche 1 bis 5,
**dadurch gekennzeichnet,**
**dass** der Träger zumindest verwobene oder verfilzte oder keramisch gebundene Fasern aufweist.

7. Verbundwerkstoff nach zumindest einem der Ansprüche 1 bis 6,
**dadurch gekennzeichnet,**
**dass** der Träger zumindest verwobene Fasern aus Metall oder Legierungen aufweist.

8. Verbundwerkstoff nach zumindest einem der Ansprüche 1 bis 7,
**dadurch gekennzeichnet**,
das der Träger zumindest ein Gewebe aus Stahl aufweist.

9. Verbundwerkstoff nach zumindest einem der Ansprüche 1 bis 8,
**dadurch gekennzeichnet,**
**dass** der Träger zumindest ein Gewebe mit einer Maschenweite von 5 bis 500 µm aufweist.

10. Verbundwerkstoff nach zumindest einem der Ansprüche 1 bis 6,
**dadurch gekennzeichnet,**
**dass** der Träger ein Metallvlies mit einer Porenweite von 0,1 bis 500 µm aufweist.

11. Verbundwerkstoff nach zumindest einem der Ansprüche 1 bis 10,
**dadurch gekennzeichnet,**
**dass** der Träger zumindest Aluminium, Silicium, Cobalt, Mangan, Zink, Vanadium, Molybdän, Indium, Blei, Wismuth, Silber, Gold, Nickel, Kupfer, Eisen, Titan, Platin, Edelstahl, Stahl oder Messing oder eine Legierung aus diesen Materialien oder ein mit Au, Ag, Pb, Ti, Ni, Cr, Pt, Pd, Rh, Ru und/oder Ti beschichtetes Material aufweist.

12. Verbundwerkstoff nach zumindest einem der Ansprüche 1 bis 11,
**dadurch gekennzeichnet,**
**dass** die anorganische Komponente, zumindest eine Verbindung zumindest eines der Elemente Sc, Y, Ti, Zr, Nb, V, Cr, Mo, W, Mn, Fe, Co, B, Al, In, Tl, Si, Ge, Sn, Pb, Sb oder Bi mit Sauerstoff aufweist.

13. Verbundwerkstoff nach Anspruch 12,
**dadurch gekennzeichnet,**
**dass** die anorganische Komponente zumindest eine Verbindung ausgewählt aus Y₂O₃, ZrO₂, Fe₂O₃, Fe₃O₄, Al₂O₃ oder SiO₂ aufweist.

14. Verbundwerkstoff nach zumindest einem der Ansprüche 1 bis 13,
**dadurch gekennzeichnet,**
**dass** die anorganische Komponente Alumosilicate, Aluminiumphosphate, Zeolithe oder partiell ausgetauschte Zeolithe aufweist.

15. Verbundwerkstoff nach zumindest einem der Ansprüche 1 bis 12,
**dadurch gekennzeichnet,**
**dass** die anorganische Komponente amorphe mikroporöse Mischoxide, die bis zu 20 % nicht hydrolisierbare organische Verbindungen enthalten können, aufweist.

16. Verbundwerkstoff nach zumindest einem der Ansprüche 1 bis 15,
**dadurch gekennzeichnet,**
**dass** der Verbundwerkstoff zumindest zwei Korngrößenfraktionen von zumindest einer anorganischen Komponente aufweist.

17. Verbundwerkstoff nach Anspruch 16,
**dadurch gekennzeichnet,**
**dass** die Korngrößenfraktionen im Verbundwerkstoff ein Korngrößenverhältnis von 1 : 1 bis 1 : 100 aufweist.

18. Verbundwerkstoff nach zumindest einem der Ansprüche 16 oder 17,
**dadurch gekennzeichnet,**
**dass** der Verbundwerkstoff ein Mengenverhältnis der Korngrößenfraktionen von 0,01 zu 1 bis 1 zu 0,01 aufweist.

19. Verbundwerkstoff nach zumindest einem der Ansprüche 1 bis 18,
**dadurch gekennzeichnet,**
**dass** die Stoffdurchlässigkeit des Verbundwerkstoffes durch die Korngröße der verwendeten anorganischen Komponente auf Teilchen mit einer bestimmten maximalen Größe begrenzt werden kann.

20. Verbundwerkstoff nach zumindest einem der Ansprüche 1 bis 19,
**dadurch gekennzeichnet,**
**dass** die zumindest eine anorganische Komponente aufweisende Suspension zumindest eine Flüssigkeit, ausgewählt aus Wasser, Alkohol und Säure oder eine Kombination dieser Flüssigkeiten aufweist.

21. Verfahren zur Herstellung eines Verbundwerkstoffes gemäß einem der Ansprüche 1 bis 20,
**dadurch gekennzeichnet,**
**dass** auf zumindest einen durchbrochenen und stoffdurchlässigen Träger, der Fasern aus zumindest einem Material, ausgewählt aus Kohlenstoff, Metallen, Legierungen, Keramiken, Glas, Mineralien, Kunststoffen, amorphen Substanzen, Verbundstoffen oder Naturprodukten oder aus zumindest einer Kombination solcher Materialien aufweist, zumindest eine Suspension gebracht wird, die zumindest eine anorganische Komponente aus zumindest einer Verbindung zumindest eines der Elemente Sc, Y, Ti, Zr, Nb, V, Cr, Mo, W, Mn, Fe, Co, B, Al, In, Tl, Si, Ge, Sn, Pb, Sb oder Bi mit zumindest einem der Elemente Te, Se, S, O, Sb, As, P, N, Ge, Si, C oder Ga aufweist und eine Korngröße von 1 bis 10000 nm aufweist suspendiert in einem Sol aufweist, und daß die Suspension durch zumindest einmaliges Erwärmen auf eine Temperatur von 50 bis 100 °C für 10 Minuten bis 5 Stunden oder auf eine Temperatur von 100 bis 800 °C für 1 Sekunde bis 10 Minuten, auf und im Trägermaterial verfestigt wird, **dadurch gekennzeichnet,**
**dass** der Träger von einer Rolle abgerollt wird, mit einer Geschwindigkeit von 1 m/h bis 1 m/s zumindest eine Apparatur, welche die Suspension auf und in den Träger bringt und zumindest eine weitere Apparatur, welche das Verfestigen der Suspension auf und in dem Träger durch Erwärmen ermöglicht, durchläuft und der so hergestellte Verbundwerkstoff auf einer zweiten Rolle aufgerollt wird, wobei ein Sol, hergestellt durch Hydrolisieren zumindest eines Metallnitrats, Metallchlorids, Metallcarbonats, einer Metallalkoholatverbindung oder einer Halbmetallalkoholatverbindung ausgewählt aus der Verbindungen der Elemente Zr oder Si eingesetzt wird.

22. Verfahren nach Anspruch 21,
**dadurch gekennzeichnet,**
**dass** die Suspension auf und in oder aber auf oder in zumindest einen Träger durch Aufdrucken, Aufpressen, Einpressen Aufrollen, Aufrakeln, Aufstreichen, Tauchen, Spritzen oder Aufgießen gebracht wird.

23. Verfahren nach Anspruch 21 oder 22,
**dadurch gekennzeichnet,**
**dass** die Sole durch Hydrolisieren mit einer Flüssigkeit, einem Gas oder einem Feststoff erhalten werden.

24. Verfahren nach Anspruch 23,
**dadurch gekennzeichnet,**
**dass** als Flüssigkeit, Gas oder Feststoff zur Hydrolyse der Metallverbindung Wasser, Wasserdampf, Eis, Alkohol oder eine Säure oder eine Kombination dieser Verbindungen eingesetzt wird.

25. Verfahren nach zumindest einem der Ansprüche 23 oder 24,
**dadurch gekennzeichnet,**
**dass** die zu hydrolisierende Verbindung vor der Hydrolyse in Alkohol oder in eine Säure oder eine Kombination dieser Flüssigkeiten gegeben wird.

26. Verfahren nach zumindest einem der Ansprüche 21 bis 25,
**dadurch gekennzeichnet,**
**dass** die Hydrolyse der zu hydrolisierenden Verbindungen mit zumindest dem halben Molverhältnis Wasser, bezogen auf die hydrolisierbare Gruppe der hydrolisierbaren Verbindung, durchgeführt wird.

27. Verfahren nach zumindest einem der Ansprüche 21 bis 26,
**dadurch gekennzeichnet**
**dass** die hydrolisierte Verbindung mit zumindest einer organischen oder anorganischen Säure behandelt wird.

28. Verfahren nach Anspruch 27,
**dadurch gekennzeichnet,**
**dass** die organische oder anorganische Säure eine Konzentration von 10 bis 60 % aufweist.

29. Verfahren nach zumindest einem der Ansprüche 27 oder 28,
**dadurch gekennzeichnet,**
**dass** die hydrolisierte Verbindung mit zumindest einer Mineralsäure, ausgewählt aus Salpetersäure, Schwefelsäure, Perchlorsäure und Salzsäure oder einer Kombination dieser Säuren behandelt wird.

30. Verfahren nach zumindest einem der Ansprüche 21 oder 29,
**dadurch gekennzeichnet,**
**dass** eine anorganische Komponente, die zumindest eine Verbindung ausgewählt aus den Oxiden der Elemente Sc, Y, Ti, Zr, V, Cr, Nb, Mo, W, Mn, Fe, Ce, Co, B, Al, In, Tl, Si, Ge, Sn, Pb und Bi suspendiert wird.

31. Verfahren nach Anspruch 30,
**dadurch gekennzeichnet,**
**dass** die anorganische Komponente zumindest eine Verbindung ausgewählt aus Y₂O₃, ZrO₂, Fe₂O₃, Fe₃O₄, Al₂O₃ oder SiO₂ aufweist.

32. Verfahren nach zumindest einem der Ansprüche 21 bis 31,
**dadurch gekennzeichnet,**
**dass** der Massenanteil der suspendierten Komponente dem 0,1 bis 500-fachen der eingesetzten hydrolisierten Verbindung entspricht.

33. Verfahren nach zumindest einem der Ansprüche 21 bis 31,
**dadurch gekennzeichnet,**
**dass** das Erwärmen der auf und im Träger vorhandenen Suspension mittels erwärmter Luft, Heißluft, Infrarotstrahlung, Mikrowellenstrahlung oder elektrisch erzeugter Wärme, erfolgt.

34. Verfahren nach zumindest einem der Ansprüche 33,
**dadurch gekennzeichnet,**
**dass** das Erwärmen unter Nutzung des Trägermaterials als elektrische Widerstandheizung erfolgt.

35. Verfahren nach zumindest einem der Ansprüche 21 bis 34,
**dadurch gekennzeichnet,**
**dass** das Verfestigen der Suspension **dadurch** erreicht wird, daß die Suspension auf oder in oder aber auf und in einen vorgewärmten Träger gebracht wird.

36. Verfahren nach zumindest einem der Ansprüche 21 bis 35,
**dadurch gekennzeichnet,**
**dass** eine ungesinterte keramische oder anorganische Schicht auf einen Verbundwerkstoff gemäß einem der Ansprüche 1 bis 20 als Träger aufgebracht wird und durch Erhitzen auf diesem Träger verfestigt wird.

37. Verwendung eines Verbundwerkstoffes gemäß einem der Ansprüche 1 bis 20 als Filter zur Auftrennung von Stoffgemischen

38. Verwendung eines Verbundwerkstoffes gemäß einem der Ansprüche 1 bis 20 als Filter zur Auftrennung von Flüssigkeitsgemischen, Gasgemischen, zumindest eine Flüssigkeit und zumindest ein Gas enthaltenden Gemischen, zumindest einen Feststoff und zumindest eine Flüssigkeit enthaltenden Gemischen und zumindest ein Gas und zumindest einen Feststoff oder zumindest eine Flüssigkeit oder ein Gas enthaltenden Gemischen.

39. Verwendung eines Verbundwerkstoffes gemäß einem der Ansprüche 1 bis 20 als Filter in druckbetriebenen Auftrennprozessen.

40. Verwendung eines Verbundwerkstoffes gemäß einem der Ansprüche 1 bis 20 als Membran zur Mikrofiltration, Ultrafiltration oder Nanofiltration.

41. Verwendung eines Verbundwerkstoffes gemäß einem der Ansprüche 1. bis 20 in katalytischen Prozessen.

42. Verwendung eines Verbundwerkstoffes gemäß einem der Ansprüche 1 bis 20 als formselektive Membran.

43. Verwendung eines Verbundwerkstoffes gemäß einem der Ansprüche 1 bis 20 als formselektive Membran in einem Wickelmodul.

44. Verwendung eines Verbundwerkstoffes gemäß einem der Ansprüche 1 bis 20 als formselektive Membran in einem Flachmodul.

45. Verwendung eines Verbundwerkstoffes gemäß einem der Ansprüche 1 bis 20 als Diaphragma oder Batterieseparator.

## Claims

1. A flexible, pervious composite material based on at least one perforate and pervious support, having on at least one side of the support and in the interior of the support at least one inorganic component which is obtainable by applying a suspension which comprises at least one inorganic component having a particle size of from 1 to 10 000 nm and comprising a compound of at least one of the elements Sc, Y, Ti, Zr, Nb, V, Cr, Mo, W, Mn, Fe, Co, B, Al, In, Tl, Si, Ge, Sn, Pb, Sb and Bi with at least one of the elements Te, Se, S, O, Sb, As, P, N, Ge, Si, C and Ga, in suspension in a sol, to at least one perforate and pervious support which comprises fibres of at least one material selected from carbon, metals, alloys, ceramics, glass, minerals, plastics, amorphous substances, composites and natural products, or of at least one combination of such materials, and heating the treated support at least once to a temperature of from 50 to 100°C for from 10 minutes to 5 hours or to a temperature of from 100 to 800°C for from 1 second to 10 minutes, during which the suspension comprising at least one inorganic component is solidified on and in the support,
**characterized in that**
the composite material has a thickness of from 5 to 150 µm and can be flexed to a radius of down to 1 mm and **in that** a sol prepared by hydrolysing at least one metal nitrate, metal chloride, metal carbonate, metal alkoxide compound or semimetal alkoxide compound selected from the compounds of the elements Zr and Si is used.

2. A composite material according to claim 1,
**characterized in that**
the composite material is pervious to gases, solids or liquids.

3. A composite material according to either of claims 1 and 2,
**characterized in that**
the composite material is pervious to particles having a size of from 0.5 nm to 10 µm.

4. A composite material according to at least one of claims 1 to 3,
**characterized in that**
the perforate and pervious support comprises interstices having a size of from 0.02 to 500 µm.

5. A composite material according to at least one of claims 1 to 4,
**characterized in that**
the support has been modified by at least one method selected from thermal, mechanical and chemical treatment, or by a combination of these kinds of treatment.

6. A composite material according to at least one of claims 1 to 5,
**characterized in that**
the support comprises at least woven or felted or ceramically bound fibres.

7. A composite material according to at least one of claims 1 to 6,
**characterized in that**
the support comprises at least woven fibres of metal or of alloys.

8. A composite material according to at least one of claims 1 to 7,
**characterized in that**
the support comprises at least one woven steel fabric.

9. A composite material according to at least one of claims 1 to 8,
**characterized in that**
the support comprises at least one woven fabric having a mesh size of from 5 to 500 µm.

10. A composite material according to at least one of claims 1 to 6,
**characterized in that**
the support comprises a metal nonwoven having a pore size of from 0.1 to 500 µm.

11. A composite material according to at least one of claims 1 to 10,
**characterized in that**
the support comprises at least aluminium, silicon, cobalt, manganese, zinc, vanadium, molybdenum, indium, lead, bismuth, silver, gold, nickel, copper, iron, titanium, platinum, stainless steel, steel or brass or an alloy of these materials, or a material coated with Au, Ag, Pb, Ti, Ni, Cr, Pt, Pd, Rh, Ru and/or Ti.

12. A composite material according to at least one of claims 1 to 11,
**characterized in that**
the inorganic component comprises at least one compound of at least one of the elements Sc, Y, Ti, Zr, Nb, V, Cr, Mo, W, Mn, Fe, Co, B, Al, In, Tl, Si, Ge, Sn, Pb, Sb and Bi with oxygen.

13. A composite material according to claim 12,
**characterized in that**
the inorganic component comprises at least one compound selected from Y₂O₃, ZrO₂, Fe₂O₃, Fe₃O₄, Al₂O₃ and SiO₂.

14. A composite material according to at least one of claims 1 to 13,
**characterized in that**
the inorganic component comprises aluminosilicate, aluminium phosphate, zeolite or partially exchanged zeolite.

15. A composite material according to at least one of claims 1 to 12,
**characterized in that**
the inorganic component comprises amorphous microporous mixed oxide which may contain up to 20% of non-hydrolysable organic compound.

16. A composite material according to at least one of claims 1 to 15,
**characterized in that**
the composite material comprises at least two particle-size fractions of at least one inorganic component.

17. A composite material according to claim 16,
**characterized in that**
the particle-size fractions in the composite material have a particle-size ratio of from 1:1 to 1:100.

18. A composite material according to at least one of claims 16 and 17,
**characterized in that**
the composite material has a quantitative particle-size-fraction ratio of from 0.01:1 to 1:0.01.

19. A composite material according to at least one of claims 1 to 18,
**characterized in that**
the perviousness of the composite material can be limited by the particle size of the inorganic component used to particles having a defined maximum size.

20. A composite material according to at least one of claims 1 to 19,
**characterized in that**
the suspension comprising at least one inorganic component comprises at least one liquid selected from water, alcohol and acid, or a combination of these liquids.

21. A process for producing a composite material according to any one of claims 1 to 20, wherein at least one suspension which comprises at least one inorganic component having a particle size of from 1 to 10 000 nm and comprising at least one compound of at least one of the elements Sc, Y, Ti, Zr, Nb, V, Cr, Mo, W, Mn, Fe, Co, B, Al, In, Tl, Si, Ge, Sn, Pb, Sb and Bi with at least one of the elements Te, Se, S, O, Sb, As, P, N, Ge, Si, C and Ga, in suspension in a sol, is applied to at least one perforate and pervious support which comprises fibres of at least one material selected from carbon, metals, alloys, ceramics, glass, minerals, plastics, amorphous substances, composites and natural products, or from at least one combination of such materials, and wherein the suspension is solidified on and in the support material by heating at least once to a temperature of from 50 to 100°C for from 10 minutes to 5 seconds or to a temperature of from 100 to 800°C for from 1 second to 10 minutes,
**characterized in that**
the support is unwound from a roll, at a speed of from 1 m/h to 1 m/s passes through at least one apparatus that brings the suspension onto and into the support and through at least one further apparatus that allows the solidification of the suspension on and in the support by heating, and the composite material thus produced is wound up onto a second roll, a sol being used which is prepared by hydrolysing at least one metal nitrate, metal chloride, metal carbonate, metal alkoxide compound or semimetal alkoxide compound selected from the compounds of the elements Zr and Si.

22. A process according to claim 21,
**characterized in that**
the suspension is brought onto and into or else onto or into at least one support by printing on, pressing on, pressing in, rolling on, knifecoating on, spreading on, dipping, spraying or pouring on.

23. A process according to either of claims 21 and 22,
**characterized in that**
the sol is obtained by hydrolysing with a liquid, a gas or a solid.

24. A process according to claim 23,
**characterized in that**
water, steam, ice, alcohol or an acid or a combination of these compounds is used as liquid, gas or solid for hydrolysing the metal compound.

25. A process according to at least one of claims 23 and 24,
**characterized in that**
the compound to be hydrolysed is introduced into alcohol or an acid or a combination of these liquids before the hydrolysis.

26. A process according to at least one of claims 21 to 25,
**characterized in that**
the hydrolysis of the compounds to be hydrolysed is carried out with at least half the molar ratio of water, based on the hydrolysable group of the hydrolysable compound.

27. A process according to at least one of claims 21 to 26,
**characterized in that**
the hydrolysed compound is treated with at least one organic or inorganic acid.

28. A process according to claim 27,
**characterized in that**
the organic or inorganic acid has a concentration of from 10 to 60%.

29. A process according to at least one of claims 27 and 28,
**characterized in that**
the hydrolysed compound is treated with at least one mineral acid selected from nitric acid, sulphuric acid, perchloric acid and hydrochloric acid, or a combination of these acids.

30. A process according to at least one of claims 21 and 29,
**characterized in that**
an inorganic component is suspended which comprises at least one compound selected from the oxides of the elements Sc, Y, Ti, Zr, V, Cr, Nb, Mo, W, Mn, Fe, Ce, Co, B, Al, In, Tl, Si, Ge, Sn, Pb and Bi.

31. A process according to claim 30,
**characterized in that**
the inorganic component comprises at least one compound selected from Y₂O₃, ZrO₂, Fe₂O₃, Fe₃O₄, Al₂O₃ and SiO₂.

32. A process according to at least one of claims 21 to 31,
**characterized in that**
the mass fraction of the suspended component corresponds to from 0.1 to 500 times that of the hydrolysed compound used.

33. A process according to at least one of claims 21 to 31,
**characterized in that**
the heating of the suspension present on and in the support takes place by means of heated air, hot air, infrared radiation, microwave radiation or electrically generated heat.

34. A process according to claim 33,
**characterized in that**
the heating takes place with utilization of the support material in the form of electrical resistance heating.

35. A process according to at least one of claims 21 to 34,
**characterized in that**
the suspension is solidified by bringing the suspension onto or into or else onto and into a preheated support.

36. A process according to at least one of claims 21 to 35,
**characterized in that**
an unsintered ceramic or inorganic layer is applied to a composite material according to any one of claims 1 to 20, as support, and is solidified by heating on this support.

37. The use of a composite material according to any one of claims 1 to 20 as a filter for separating mixtures of substances.

38. The use of a composite material according to any one of claims 1 to 20 as a filter for separating mixtures of liquids, mixtures of gases, mixtures containing at least one liquid and at least one gas, mixtures containing at least one solid and at least one liquid, and mixtures containing at least one gas and at least one solid or at least one liquid or one gas.

39. The use of a composite material according to any one of claims 1 to 20 as a filter in a pressure-operated separation process.

40. The use of a composite material according to any one of claims 1 to 20 as a membrane for microfiltration, ultrafiltration or nanofiltration.

41. The use of a composite material according to any one of claims 1 to 20 in a catalytic process.

42. The use of a composite material according to any one of claims 1 to 20 as a shape-selective membrane.

43. The use of a composite material according to any one of claims 1 to 20 as a shape-selective membrane in a wound module.

44. The use of a composite material according to any one of claims 1 to 20 as a shape-selective membrane in a flat module.

45. The use of a composite material according to any one of claims 1 to 20 as a diaphragm or battery separator.

## Revendications

1. Matériau composite perméable, flexible, à base d'au moins un support perforé et perméable qui présente sur au moins un côté du support et à l'intérieur du support un composant inorganique, qui peut être obtenu par application d'une suspension qui comporte au moins un composant inorganique composant un composé d'au moins l'un des éléments Sc, Y, Ti, Zr, Nb, V, Cr, Mo, W, Mn, Fe, Co, B, Al, In, Tl, Si, Ge, Sn, Pb, Sb ou Bi avec au moins l'un des éléments Te, Se, S, O, Sb, As, P, N, Ge, Si, C ou Ga, ce composé ayant une granulométrie de 1 à 10 000 nm et étant en suspension dans un sol, sur au moins un support perforé et perméable qui comporte des fibres d'au moins une matière sélectionnée parmi le carbone, des métaux, des alliages, des céramiques, le verre, des minéraux, des plastiques, des substances amorphes, des matières composites ou des produits naturels ou au moins une combinaison de ces matières, et par au moins un réchauffement unique à une température de 50 à 100 °C pendant 10 minutes à cinq heures ou à une température de 100 à 800 °C pendant 1 seconde à 10 minutes, lors duquel la suspension comportant au moins un composant inorganique est solidifiée sur et dans le support,
**caractérisé en ce que**
le matériau composite a une épaisseur de 5 à 150 µm et peut être replié jusqu'à un rayon de 1 mm, et on utilise un sol, préparé par hydrolyse d'au moins un nitrate métallique, un chlorure métallique, un carbonate métallique, un composé d'alcoolate métallique ou un composé d'alcoolate semi-métallique choisi parmi les composés des éléments Zr ou Si.

2. Matériau composite selon la revendication 1,
**caractérisé en ce que**
le matériau composite est perméable aux gaz, aux matières solides ou aux liquides.

3. Matériau composite selon la revendication 1 ou 2,
**caractérisé en ce que**
le matériau composite est perméable pour des particules d'une taille de 0, 5 nm à 10 µm.

4. Matériau composite selon au moins l'une des revendications 1 à 3,
**caractérisé en ce que**
le support perforé et perméable présente des interstices d'une taille de 0,02 à 500 µm.

5. Matériau composite selon au moins l'une des revendications 1 à 4,
**caractérisé en ce que**
le support a été modifié par au moins une méthode choisie parmi un traitement thermique, mécanique et chimique ou une combinaison de ces types de traitement.

6. Matériau composite selon au moins l'une des revendications 1 à 5,
**caractérisé en ce que**
le support comporte au moins des fibres tissées ou feutrées ou liées céramiquement.

7. Matériau composite selon au moins l'une des revendications 1 à 6,
**caractérisé en ce que**
le support comporte au moins des fibres tissées en métal ou en alliages.

8. Matériau composite selon au moins l'une des revendications 1 à 7,
**caractérisé en ce que**
le support comporte au moins un tissu d'acier.

9. Matériau composite selon au moins l'une des revendications 1 à 8,
**caractérisé en ce que**
le support comporte au moins un tissu d'une largeur de maille de 5 à 500 µm.

10. Matériau composite selon au moins l'une des revendications 1 à 6,
**caractérisé en ce que**
le support comporte un tissu métallique non tissé d'une largeur de pore de 0,1 à 500 µm.

11. Matériau composite selon au moins l'une des revendications 1 à 10,
**caractérisé en ce que**
le support comporte au moins de l'aluminium, du silicium, du cobalt, du manganèse, du zinc, du vanadium, du molybdène, de l'indium, du plomb, du bismuth, de l'argent, de l'or, du nickel, du cuivre, du fer, du titane, du platine, de l'acier spécial, de l'acier ou du laiton ou un alliage de ces matériaux ou un matériau revêtu de : Au, Ag, Pb, Ti, Ni, Cr, Pt, Pd, Rh, Ru et/ou Ti.

12. Matériau composite selon au moins l'une des revendications 1 à 11,
**caractérisé en ce que**
le composant inorganique comporte au moins un composé d'au moins l'un des éléments Sc, Y, Ti, Zr, Nb, V. Cr, Mo, W, Mn, Fe, Co, B. Al, In, Tl, Si, Ge, Sn, Pb, Sb ou Bi avec l'oxygène.

13. Matériau composite selon la revendication 12,
**caractérisé en ce que**
le composant inorganique comporte au moins un composé choisi parmi Y₂ O₃, Zr O₂, Fe₂ O₃, Fe₃ O₄, Al₂ O₃ ou SiO₂.

14. Matériau composite selon au moins l'une des revendications 1 à 13,
**caractérisé en ce que**
le composant inorganique comporte des alumosilicates, des phosphates d'aluminium, des zéolites ou des zéolites partiellement échangées.

15. Matériau composite selon au moins l'une des revendications 1 à 12,
**caractérisé en ce que**
le composant inorganique comporte des oxydes mixtes micro-poreux amorphes, qui peuvent contenir jusqu'à 20 % de composés organiques non hydrolysables.

16. Matériau composite selon au moins l'une des revendications 1 à 15,
**caractérisé en ce que**
le matériau composite comprend au moins deux fractions granulométriques d'au moins un composant inorganique.

17. Matériau composite selon la revendication 16,
**caractérisé en ce que**
les fractions granulométriques dans le matériau composite présentent un rapport de grosseur de grains de 1 / 1 à 1 / 100.

18. Matériau composite selon au moins l'une des revendications 16 ou 17,
**caractérisé en ce que**
le matériau composite présente un rapport quantitatif des fractions granulométriques de 0,01 / 1 à 1 / 0,01.

19. Matériau composite selon au moins l'une des revendications 1 à 18,
**caractérisé en ce que**
la perméabilité du matériau composite peut être limitée par la granulométrie du (des) composant(s) inorganique(s) utilisé(s) à celle de particules d'une grosseur maximale déterminée.

20. Matériau composite selon au moins l'une des revendications 1 à 19,
**caractérisé en ce que**
la suspension comportant au moins un composant inorganique comporte au moins un liquide choisi parmi l'eau, un alcool et un acide ou une combinaison de ces liquides.

21. Procédé de fabrication d'un matériau composite selon une des revendications 1 à 20,
**caractérisé en ce que**
sur au moins un support perforé et perméable, qui comporte des fibres d'au moins un matériau sélectionné parmi le carbone, des métaux, des alliages, des céramiques, le verre, des minéraux, des plastiques, des substances amorphes, des substances composites ou des produits naturels ou d'au moins une combinaison de ces matériaux, se trouve appliquée au moins une suspension qui comporte au moins un composant inorganique constitué d'au moins un composé d'au moins l'un des éléments, Se. Y, Ti, Zr, Nb, V, Cr, Mo, W, Mn, Fe, Co, B, Al, In, Tl, Si, Ge, Sn, Pb, Sb ou Bi avec au moins l'un des éléments Te, Se, S, O, Sb, As, P, N, Ge, Si, C ou Ga, le composé ayant une granulométrie de 1 à 10 000 nm, et étant en suspension dans un sol, et la suspension est solidifiée par au moins un réchauffement unique à une température de 50 à 100 °C pendant 10 minutes à 5 heures ou à une température de 100 à 800 °C pendant 1 seconde à 10 minutes, sur et dans la matière support,
**caractérisé en ce que**
le support est déroulé d'un rouleau, traverse à une vitesse de 1 m/h à 1 m/s au moins un appareil, qui applique la suspension sur et dans le support, et au moins un autre appareil qui permet la solidification de la suspension sur et dans le support par réchauffement, et le matériau composite ainsi produit est enroulé sur un deuxième rouleau, et le sol utilisé est préparé par hydrolyse d'au moins un nitrate métallique, un chlorure métallique, un carbonate métallique, un composé d'alcoolate métallique, ou un composé alcoolate métalloïdique, choisi parmi les composés des éléments Zr ou Si.

22. Procédé selon la revendication 21,
**caractérisé en ce que**
la suspension est appliquée sur et dans ou sur ou dans au moins un support par impression, pression, injection sous pression, déroulement, raclage, badigeonnage, immersion, pulvérisation ou coulée.

23. Procédé selon une des revendications 21 ou 22,
**caractérisé en ce que**
les sols sont obtenus par hydrolyse avec un liquide, un gaz ou un solide.

24. Procédé selon la revendication 23,
**caractérisé en ce que**
comme liquide, gaz ou solide, pour l'hydrolyse du composé métallique, on utilise de l'eau, de la vapeur d'eau, de la glace, un alcool ou un acide ou une combinaison de ces composés.

25. Procédé selon au moins l'une des revendications 23 ou 24,
**caractérisé en ce que**
le composé à hydrolyser est introduit avant l'hydrolyse dans un alcool ou dans un acide ou dans une combinaison de ces liquides.

26. Procédé selon au moins l'une des revendications 21 à 25,
**caractérisé en ce que**
l'hydrolyse des composés à hydrolyser est effectuée avec au moins le rapport molaire moitié d'eau, par rapport au groupe hydrolysable du composé hydrolysable.

27. Procédé selon au moins l'une des revendications 21 à 26.
**caractérisé en ce que**
le composé hydrolysé est traité avec au moins un acide organique ou inorganique.

28. Procédé selon la revendication 27,
**caractérisé en ce que**
l'acide organique ou inorganique se trouve à une concentration de 10 à 60%.

29. Procédé selon au moins l'une des revendications 27 ou 28,
**caractérisé en ce que**
le composé hydrolysé est traité avec au moins un acide minéral choisi parmi l'acide nitrique, l'acide sulfurique, l'acide perchlorique et l'acide chlorhydrique ou une combinaison de ces acides.

30. Procédé selon au moins l'une des revendications 21 ou 29,
**caractérisé en ce que**
on met en suspension un composant inorganique qui comporte au moins un composé choisi parmi les oxydes des éléments Sc, Y, Ti, Zr, V, Cr, Nb, Mo, W, Mn, Fe, Ce, Co, B, Al, In, Tl, Si, Ge, Sn, Pb, et Bi.

31. Procédé selon la revendication 30,
**caractérisé en ce que**
le composant inorganique comporte au moins un composé choisi parmi Y₂O₃, Zr O₂, Fe₂O₃, Fe₃ O₄, Al₂ O₃ ou SiO₂.

32. Procédé selon au moins l'une des revendications 21 à 31,
**caractérisé en ce que**
la fraction massique du composant en suspension correspond à 0,1 à 500 fois celle du composé hydrolysé utilisé.

33. Procédé selon au moins l'une des revendications 21 à 31,
**caractérisé en ce que**
le réchauffement de la suspension se trouvant sur et dans le support a lieu au moyen d'air réchauffé, air chaud, rayonnement infrarouge, irradiation par micro-ondes ou chaleur produite électriquement.

34. Procédé selon la revendication 33,
**caractérisé en ce que**
le chauffage a lieu avec utilisation du matériel du support comme mode de chauffage par résistance électrique.

35. Procédé selon au moins l'une des revendications 21 à 34,
**caractérisé en ce que**
la solidification de la suspension est obtenue en appliquant la suspension sur ou dans, ou sur et dans un support préchauffé.

36. Procédé selon au moins l'une des revendications 21 à 35,
**caractérisé en ce que**
on applique une couche céramique ou inorganique non frittée sur un matériau composite selon une des revendications 1 à 20 comme support, et on la solidifie par chauffage sur ce support.

37. Utilisation d'un matériau composite selon l'une des revendications 1 à 20, comme filtre pour la séparation de mélanges de matières.

38. Utilisation d'un matériau composite selon l'une des revendications 1 à 20, comme filtre pour la séparation de mélanges de liquides, mélanges gazeux, mélanges contenant au moins un liquide et au moins un gaz, mélanges contenant au moins un solide et au moins un liquide, et mélanges contenant au moins un gaz et au moins un solide ou au moins un liquide ou un gaz.

39. Utilisation d'un matériau composite selon l'une des revendications 1 à 20, comme filtre dans les processus de séparation par action de la pression.

40. Utilisation d'un matériau composite selon l'une des revendications 1 à 20, comme membrane pour la micro-filtration, l'ultrafiltration ou la nanofiltration.

41. Utilisation d'un matériau composite selon l'une quelconque des revendications 1 à 20, dans les processus catalytiques.

42. Utilisation d'un matériau composite selon l'une des revendications 1 à 20, comme membrane sélective de forme.

43. Utilisation d'un matériau composite selon l'une des revendications 1 à 20, comme membrane sélective de forme dans un module en bobine.

44. Utilisation d'un matériau composite selon l'une des revendications 1 à 20, comme membrane sélective de forme dans un module plat.

45. Utilisation d'un matériau composite selon l'une des revendications 1 à 20, comme diaphragme ou séparateur dans des batteries.
